# EUROPÄISCHE PATENTSCHRIFT

(11) **EP 3 433 047 B1**
(45) Veröffentlichungstag und Bekanntmachung des Hinweises auf die Patenterteilung: **19.07.2023**
(21) Anmeldenummer: 17718006.4
(22) Anmeldetag: 15.03.2017
(51) Int. Cl.: B23K 20/12

(54) **VORRICHTUNG UND VERFAHREN ZUM RÜHRREIBSCHWEISSEN VON WERKSTÜCKEN MIT HÖHENUNTERSCHIEDEN DER FÜGEPARTNER**
DEVICE AND METHOD FOR FRICTION STIR WELDING OF WORKPIECES WITH HEIGHT DIFFERENCES OF JOINING PARTNER
DISPOSITIF ET PROCÉDÉ DE SOUDAGE PAR FRICTION MALAXAGE DES PIÈCES AVEC DIFFÉRENCES DE HAUTEUR

(30) Priorität: 23.03.2016 DE 102016003580
(43) Veröffentlichungstag der Anmeldung: 30.01.2019
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Kindermann, Peter
(86) Internationale Anmeldenummer: PCT/DE2017/000066
(87) Internationale Veröffentlichungsnummer: WO 2017/162224

(56) Entgegenhaltungen:
- DE-A1-102014 001 050
- DE-B3-102014 004 331
- DE-U1-202015 005 763
- JP-A- 2015 085 382

## Beschreibung

Die Erfindung betrifft eine Vorrichtung und ein Verfahren zum Rührreibverschwei-ßen von Werkstücken bei durch Fertigungstoleranzen bedingten Höhenunterschieden der Fügepartner.

Es hat sich in der Praxis herausgestellt, dass bei den Orbitalschweißungen der Rohre die für das Verlegen unterirdisch verlegter Stromleitungen verwendet werden die beiden zu verschweißenden Rohrenden teilweise mit erheblichem Höhenunterschied in das Reibwerkzeug einlaufen. Ursächlich für solche Höhenunterschiede sind Fertigungstoleranzen der zu verschweißenden Rohre von mehreren Millimetern im Durchmesser, die im gegebenen Stumpfstoß dazu führen können, dass eine Seite bis zu 2 mm höher liegt als das Gegenüber. Bestehende Vorrichtungen und Verfahren des Rührreibschweißens können in solchen Fällen die, besonders bei dem Verschweißen von unterirdisch zu verlegenden Stromleitungen, gestellten Anforderungen an das Schweißergebnis nicht erfüllen. Für das Verschweißen ebener Strukturen die im Stumpfstoß Höhenunterschiede bis zu 2 mm aufweisen, gilt ersichtlich Vergleichbares.

Zum Stand der Technik wird weiter auf die EP 2 561 948 A1 verwiesen, die ein Verfahren und eine Anlage zum Herstellen eines Flansch-Rohr-Flansch-Elements mittels Rührreibschweißens betrifft. Einer solchen Anlage nach dem Oberbegriff des Anspruchs 11 liegt die Zielsetzung zugrunde, das Zentrieren von Flansch und Rohr zu vereinfachen und die Schweißbadsicherung neben dem Abstützen des durch das Rührreibschweißen erweichten Bereichs auch zur Aufnahme der Anpresskräfte beim Rührreibschweißen und zum Zentrieren des Rohres nach der Längsachse der Flansche unter Wegfall von Mess- und Einrichtvorgängen bei gleichzeitiger Reduzierung der Fertigungszeiten, unter Einsparung von Material und Gewährleistung wirtschaftlicher Vorteile zu nutzen. Im Kennzeichen des Anspruchs 11 wird hierzu beansprucht, dass die Schweißbadsicherung als eine pneumatisch spann - und lösbare Spann- und Abstützscheibe zum Zentrieren des Rohres auf die Drehachse der Flansche und zum Aufnehmen der Anpresskräfte beim Rührreibschweißen ausgebildet ist, und dass ein Sensor zum Abtasten der Stoßfugen zwischen Rohr und Flansch vorgesehen ist, und dass weiter eine Vorrichtung zum An- und Abfahren eines Formkeils in Flucht der horizontal oberhalb der Drehachse liegenden, durch die Stoßfuge verlaufenden Tangentialebene vorgesehen ist, um den Rührreibschweißstift des Rührreibschweißwerkzeugs lochfrei aus der rührreibgeschweißten Stoßfuge herauszubewegen, wobei der Sensor und die Vorrichtung zum An - und Abfahren des Formkeils mit der Steuerung verbunden ist.

Beim Rührreibschweißen wird im Fügebereich der zu verschweißenden Materialien mittels der Reibung zwischen einem rotierenden, gleichzeitig translatorisch bewegten und mit Druck aufgebrachten, Werkzeug Reibungswärme erzeugt, die die zu verschweißenden Materialien in einen plastifizierten Zustand versetzt. Das Werkzeug wird hierbei entlang des Fügebereichs bewegt und verrührt das plastifizierte im Inneren der Naht der zu verbindenden aneinander stoßenden Materialien. Am Ende dieser Naht wird das Werkzeug aus dem Verbindungsbereich herausgezogen und die Schweißnaht ist unmittelbar belastbar.

Weiter ist aus dem Stand der Technik die vorveröffentlichte, auf die Anmelderin selbst zurückgehende, DE 10 2015 005 763 U1 bekannt, die eine Vorrichtung zum homogenen Verschweißen flächig gebogener Strukturen durch Rührreibschwei-ßen betrifft. Mit der aus dieser Druckschrift bekannten Vorrichtung ist zwar schon ein Schweißergebnis zu erzielen das hohen Qualitätsansprüchen genügt, jedoch kann hierbei nicht völlig ausgeschlossen werden, dass beim Herausziehen des Schweißpins während der Beendigung des Schweißvorgangs geringe Unebenheiten zu verzeichnen sind.

Zudem muss damit gerechnet werden, dass die Ränder der zu verschweißenden Strukturen nicht fugenlos aneinander stoßen sondern kleine Unebenheiten aufweisen die während des Schweiß-Vorgangs für das Erreichen einer ebenen Fläche die Zufuhr von "Füll-Material" notwendig machen.

Aus der den Oberbegriff des Patentanspruchs 1 bildenden Druckschrift DE 10 2014 004331 B3 ist eine Vorrichtung zum Rührreibschweißen von Werkstücken unterschiedlicher Dicke, insbesondere von rohrartigen Strukturen, bekannt, wobei ein, von einer Führungsmaschine, mittels eines Aufnahmekopfs geführter, Antriebskopf und eine, mittels eines Befestigungsflanschs am Antriebskopf verschraubte Halteglocke für einen Schweißschuh den Antrieb und die Führung für eine Schweißpin-Spitze bilden. Der Schweißschuh hat hierbei eine kreisförmige Struktur die in ihrer Mitte eine kreisförmige Öffnung zur Aufnahme der Schweißpin-Spitze aufweist, wobei diese kreisförmige Öffnung in einem diagonal zur kreisförmigen Struktur des Schweißschuhs verlaufenden Steg mit einer Glätt-Fläche in Bewegungsrichtung des Vorgangs des Rührreibschweißens gelagert ist, und wobei die Glätt-Fläche eine Vorderkante aufweist, die Teil einer stufenförmigen Spahn-Leitstufe ist. Ferner weist die Glätt-Fläche gegenüber der senkrechten Bezugsachse des Schweißpins einen kleinen Anstellwinkel auf.

Aus der Druckschrift JP 2015 085382 A ist ferner eine Vorrichtung zum Rührreibschweißen sowie ein zugehöriges Verfahren bekannt, wobei ein Führungskanal zum Zuführen eines zu verscheißenden Drahtes am Schweißschuh vorgesehen ist.

Schließlich ist aus Druckschrift DE 10 2014 001 050 A1 eine Vorrichtung und ein Verfahren zum Rührreibschweißen bekannt, wobei Kehlnähte und insbesondere Materialien mit unterschiedlicher Dicke verschweißt werden können. Die Glätt-Fläche besitzt hierbei die Form eines "verkippten" Parallelogramms mit geraden Seitenflächen.

Der Erfindung liegt daher die Aufgabe zugrunde, eine Vorrichtung und ein Verfahren zum Rührreibschweißen von Werkstücken unterschiedlicher Dicke anzugeben, wobei ein Randgrat verringert ist, wodurch bei Belastung der Schweißnaht mit elektrischer Hochspannung das Auftreten von elektrischen Überschlägen verhindert wird.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Die Erfindung wird im Folgenden näher beschrieben.

Es zeigen im Einzelnen:
Fig.1: eine Schnittdarstellung einer Anordnung zum Rührreibschweißen;
Fig.2a: eine Darstellung einer unerwünschten Randgrat-Bildung gemäß dem Stand der Technik;
Fig.2b: eine Darstellung einer erfindungsgemäßen Randgrat-Bildung;
Fig.3: eine perspektivische Ansicht eines erfindungsgemäßen Schweißschuhs;
Fig.4: eine direkte Darstellung des Schweißschuhs von unten;
Fig.5: eine Darstellung eines Schweißschuhs in einer Seitenansicht;
Fig.6: eine Darstellung eines Schweißschuhs mit Material - Führungskanälen; und
Fig.7: Darstellungen aus dem Bereich der Führungskanäle.

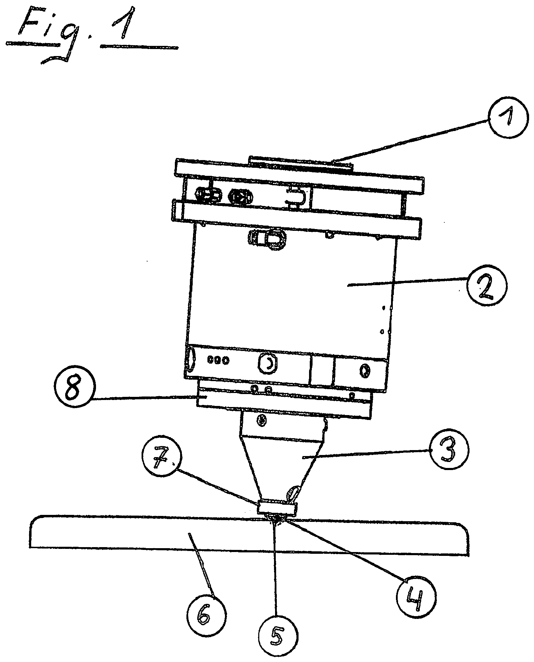

Die Fig. 1 zeigt eine Schnittdarstellung einer Anordnung zum Rührreibschweißen. Das zu fügende Bauteil 6 ist in diesem Fall als ebene Fläche gezeigt. Ein Aufnahmekopf 1 trägt einen Antriebskopf 2 der wiederum an seiner Unterseite einen Aufnahmeflansch 8 für die Halterung einer Halteglocke 3 aufweist. Die Halteglocke 3 bildet mittels einer Überwurfmutter 7 die mechanische Halterung eines Schweißschuhs 4 der in seinem Inneren einen drehbaren Schweißpin führt von dem in der Fig. 1 die Schweißpin-Spitze 5 bezeichnet ist.

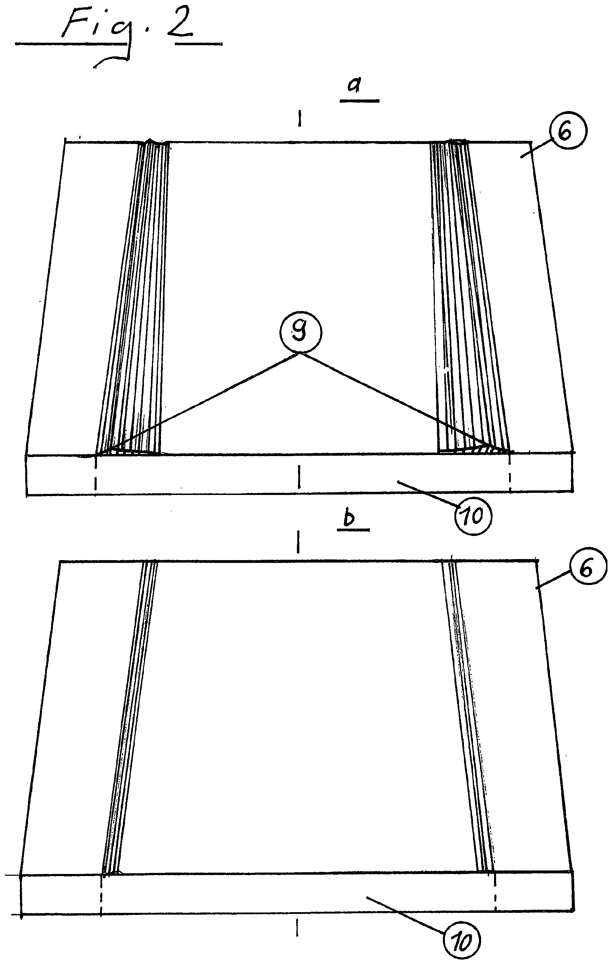

Die Fig.2a) zeigt eine Darstellung einer unerwünschten Randgrat-Bildung. In der Fig.2 a) ist beispielhaft die Verschweißung zweier zu fügender Bauteile 6 dargestellt, wobei auf der linken und der rechten Seite im Bereich 10 der Schweißnaht jeweils ein, parallel zu der Schweißnaht verlaufender Randgrat 9 zu erkennen ist. In der Fig. 2 b) ist beispielhaft eine erfindungsgemäße Verschweißung dargestellt, wobei sich nahezu kein Randgrat 9 gebildet hat.

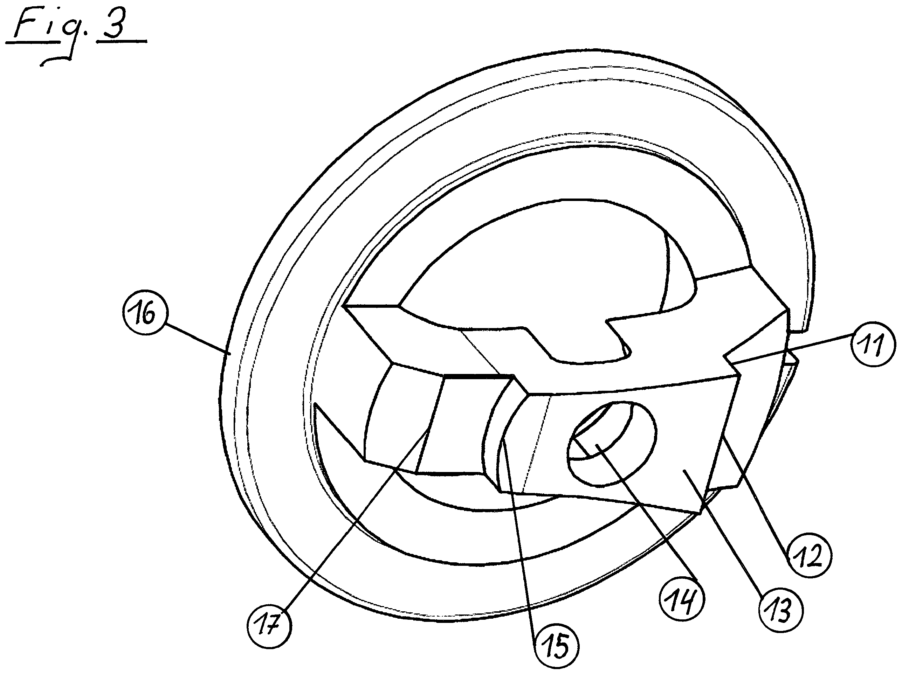

Die Fig.3: zeigt eine perspektivische Ansicht eines erfindungsgemäßen Schweißschuhs von der Unterseite her. In der Mitte des gezeigten Schweißschuhs ist eine kreisrunde Öffnung 1 erkennbar, die der Aufnahme eines sich unter Druck drehenden Schweißpins dient, wobei eine Schweißpin-Spitze 5, wie in der Fig.1 angedeutet, den eigentlichen Rührreibvorgang bewirkt. Eine trapezförmige Glättfläche 13, die um die Öffnung 14 gelagert ist dient der Glättung des durch den Schweißvorgang plastifizierten Materials und bewirkt, vor allem durch die gewählte Form der Flache 13 in der Art eines Trapezes, dass dieses Material von der relativ breiten Vorderkante 12 in Richtung der schmaleren, abgerundeten Auslauffläche der Glätt-Fläche 13 geglättet wird. Der Glätt-Fläche 13 ist eine Span-Leitstufe 11 vorgelagert, durch die entstehende Metall-Späne nach links und/oder rechts abgeleitet werden. Der Halte-Flansch 16 dient der Halterung des Schweißschuhs mittels der Überwurfmutter 7 in der Fig.1. Mit 17 ist in dieser Darstellung die Hinterkante der Glätt-Fläche 17 bezeichnet.

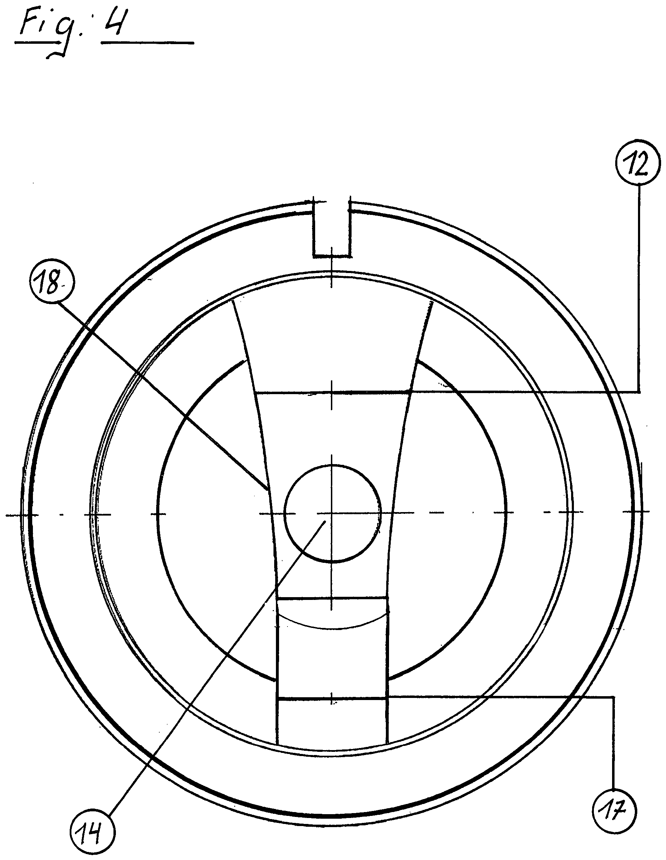

Die Fig.4: zeigt eine direkte Darstellung des Schweißschuhs von unten. In der Mitte der, hier nicht bezeichneten Glätt-Fläche ist die Öffnung 14 für einen Schweißpin zu erkennen. Ferner ist die genaue Anordnung der Vorderkannte 12 und der Hinterkante 17 aus der Fig.3 zu sehen. Als Besonderheit ist aus der Fig.4 zu ersehen, dass die Seitenflächen 18 der trapezförmigen Glätt-Fläche 13 leicht gekrümmt sind.

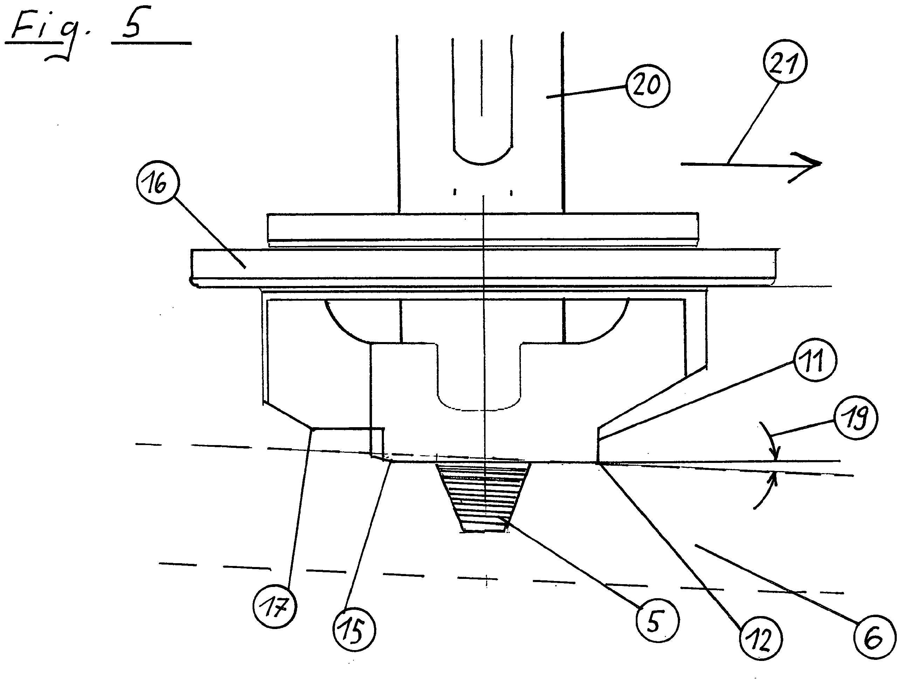

Die Fig.5: zeigt eine Darstellung eines Schweißschuhs 4 in einer Seitenansicht.

Hier ist die Richtung der Bewegung des Schweißschuhs 4 mit 21 bezeichnet. Der Schaft 20 des Schweißpins an der Oberseite des Schweißschuhs 4 findet seine Entsprechung in der Schweißpin-Spitze 5 an der Unterseite des Schweißschuhs 4. Die Lage und Höhe der Span-Leitstufe 11 und der Vorderkante 12 der Glätt-Fläche 13 an der Vorderseite des Schweißschuhs ist in Bezug zur Lage und Höhe der Hinterkante 17 der Glätt-Fläche 13 gut zu erkennen. Auch die Art der Auslauffläche 15 ist in dieser Ansicht zu sehen. Als Besonderheit ist in der Fig. 5 zu sehen, dass die Glätt-Fläche 13 unter einem kleinen Anstellwinkel 19 zur senkrechten Bezugsachse des Schweißpins geneigt ist. Dieser Anstellwinkel 19 ist gemäß der Erfindung im Werkzeug berücksichtigt, kann, gemäß einem Beispiel, das nicht durch die vorliegende Erfindung abgedeckt ist, jedoch auch durch einen maschinenseitigen Winkel erreicht werden, indem die Bearbeitungsfläche als gerade Fläche gestaltet wird und die Bearbeitungsmaschine unter einem Anstellwinkel 19 gehalten wird.

Die Glätt-Fläche 13 und/oder die Material-Führungskanäle können in einer besonderen Ausbauform eine zusätzliche Beschichtung aufweisen. Als besonders vorteilhaft sind hierbei Chromnitrid-Schichten, die mittels PVD Verfahren in Schichtdicken bis 50 µm aufgetragen werden, anzusehen.

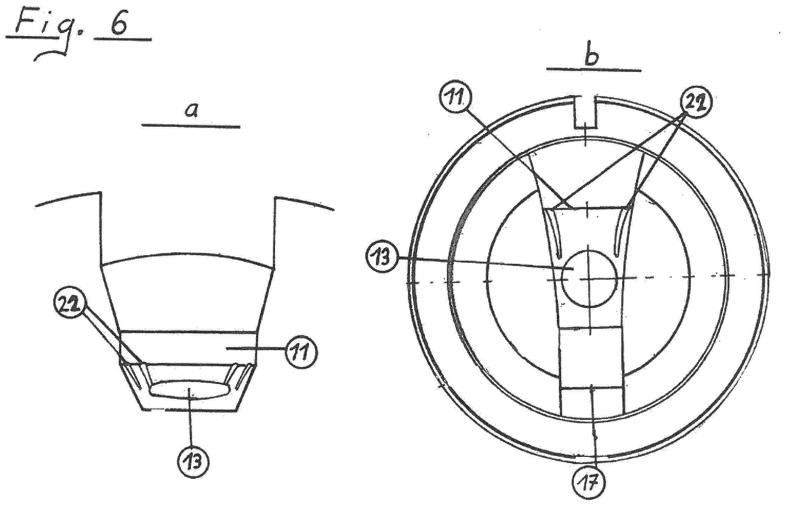

Die Fig.6: zeigt eine Darstellung eines Schweißschuhs mit Material-Führungskanälen. In der Fig. 6 a) ist eine perspektivische Ansicht auf den Schweißschuh gezeigt bei der die Span-Leitstufe 11 im Vordergrund steht. An der Kante die die Span-Leitstufe 11 mit der Glätt-Fläche 13 bildet, wobei sich die Ziffer 13 auf die gesamte Fläche bezieht, sind auf der linken und auf der rechten Seite jeweils zwei Material-Führungskanäle 22 zu sehen. Die in der Fig.6 b) gezeigte Draufsicht auf den gesamten Schweißschuh lässt in der Mitte wieder die trapezförmige Glätt-Fläche 13 mit ihrer Hinterkante 17 und ihrer Span-Leitstufe 11 erkennen. Sehr deutlich sind hier links und rechts, direkt von der Kante der Span-Leitstufe 11 ausgehend, jeweils ein Material-Führungskanal 22 aufgezeigt.

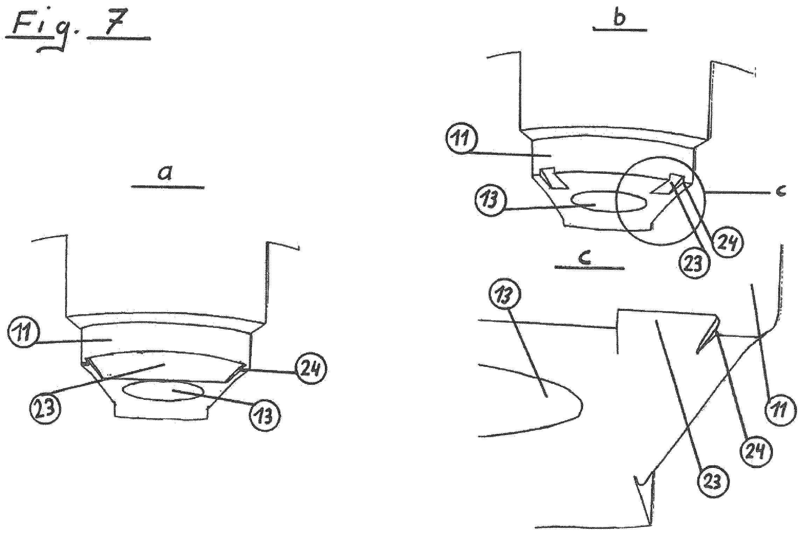

Die Fig.7: zeigt Darstellungen aus dem Bereich der Führungskanäle. Eine Variante in der Form einer "schaufelähnlichen", an ihrer Vorderkante 12 abgesenkten, nahezu über die gesamte Breite der Span-Leitstufe 11 verlaufenden, Kanalbahn 23, wird in der Ausbauform gemäß der Fig. 7 a) an jeder ihrer Breitseiten von einem Material-Führungskanal begrenzt. Diese Führungskanäle wirken gewissermaßen als "Einweiser" für das plastifizierte Material.

Die in der Fig. 7 b) gezeigte Variante weist, anders als die Version der Fig. 7 a) anstelle einer breiten "schaufelähnlichen" Aufnahmefläche im linken und rechten Bereich jeweils eine entsprechende schmälere "schaufelähnliche" Aufnahmefläche auf. Diese wirken als Seitenkanäle, wobei die Höhe des mittleren Bereichs abweichend von den äußeren Einweisern sein kann. Die Kanalkanten sind scharfkantig ausgestaltet.

Eine Variante der in Fig.7b) dargestellten Version ist mittels der, im Kreis dargestellten Version der Ausgestaltung des Schweißschuhs gezeigt.

Diese Variante weist ebenfalls zwei Seitenkanäle auf, wobei jedoch jeder Seitenkanal eine Kanalbahn 23 aufweist wie sie in der Fig.7 c) gezeigt ist. Jeder Seitenkanal weist, entsprechend der gezeigten Darstellung eine runde Material-Einweisungskante 24 auf und bildet eine Art "Räumschild"-Kontur an beiden Innenkanten der Seitenkanäle, In Verbindung mit dem stets erforderlichen Anstellwinkel 19 des Werkzeugs kann hierdurch der Materialtransport und die Erzeugung eines definierten Übergangs zum nicht-geschweißten Bereich erzielt werden.

Die Material-Einweiserkante 24 ist leicht abgerundet, weist daher eine hohe Standzeit und damit einen geringen Verschleiß auf.

Es versteht sich von selbst, dass das erfindungsgemäße Verfahren und dessen Vorrichtung bei dem Vorliegen von Werkstücken ohne Höhenunterschiede ebenfalls bessere Schweißergebnisse bringt.

### Bezugszeichenliste

- 1: Aufnahmekopf
- 2: Antriebskopf
- 3: Halteglocke für das Werkzeug
- 4: Schweißschuh mit trapezförmiger Glätt-Fläche 13
- 5: Schweißpin-Spitze
- 6: zu fügendes Bauteil
- 7: Überwurfmutter als Halterung für einen Schweißschuh
- 8: Aufnahmeflansch für die Halteglocke 3
- 9: Randgrat
- 10: Bereich der Schweißnaht
- 11: Span-Leitstufe
- 12: Vorderkante der trapezförmigen Glätt-Fläche 13
- 13: Glätt-Fläche
- 14: Öffnung für einen Schweißpin
- 15: Auslauffläche der trapezförmigen Glätt-Fläche 13
- 16: Halte-Flansch des Schweißschuhs für die Überwurfmutter 7
- 17: Hinterkante der trapezförmigen Glätt-Fläche 13
- 18: kurvenförmige Seitenfläche der trapezförmigen Glätt-Fläche 13
- 19: Anstellwinkel der Glätt-Fläche 13
- 20: Schaft des Schweißpins
- 21: Richtung des Vorschubs des Schweißschuhs 4
- 22: Material-Führungskanäle
- 23: Kanalbahn
- 24: Material-Einweiserkante (Kanal 22) rund

## Patentansprüche

1. Vorrichtung zum Rührreibschweißen von Werkstücken unterschiedlicher Dicke, insbesondere von rohrartigen Strukturen, mit den folgenden Merkmalen
a) ein, von einer Führungsmaschine, mittels eines Aufnahmekopfs (1) geführter, Antriebskopf (2) und eine, mittels eines Befestigungsflanschs (8) am Antriebskopf (2) verschraubte Halteglocke (3) für einen Schweißschuh (4) bilden den Antrieb und die Führung für eine Schweißpin-Spitze (5),
b) der Schweißschuh (4) hat eine kreisförmige Struktur die in ihrer Mitte eine kreisförmige Öffnung (14) zur Aufnahme der Schweißpin-Spitze (5) aufweist, wobei diese kreisförmige Öffnung (14) in einem diagonal zur kreisförmigen Struktur des Schweißschuhs (4) verlaufenden Steg mit einer Glätt-Fläche (13) in Bewegungsrichtung (21) des Vorgangs des Rührreibschweißens gelagert ist, und wobei die Glätt-Fläche (13) eine Vorderkante (12) aufweist, die Teil einer stufenförmigen Span-Leitstufe (11) ist, und
c) die Glätt-Fläche (13) weist gegenüber der senkrechten Bezugsachse des Schweißpins (4) einen kleinen Anstellwinkel (19) auf,
**dadurch gekennzeichnet, dass**
die Glätt-Fläche (13) die Form einer länglichen, sich in diagonaler Richtung des Schweißschuhs (4) erstreckenden, trapezförmigen Struktur aufweist, bei der die breitere Seite als Vorderkante (12) in der Richtung des Vorschubs (21) des Schweißschuhs (4) sich im vorderen Bereich und eine entsprechende schmälere Seite als Hinterkante (17) sich im hinteren Bereich erstrecken, wobei ferner die Hinterkante (17) die Begrenzung einer stufenförmig angelegten Auslauffläche (15) der Glätt-Fläche (13) bildet, und wobei die trapezförmige Struktur von einer linken und einer rechten kurvenförmigen Seitenfläche (18) ergänzt wird, deren Flächennormale jeweils in Richtung zu der Öffnung (14) sich erstrecken.

2. Vorrichtung nach Anspruch 1,
**dadurch gekennzeichnet,**
**dass** die Span-Leitstufe (11) auf der linken und auf der rechten Seite der Vorderkante (12) Material-Führungskanäle (22) aufweist.

3. Vorrichtung nach Anspruch 1,
**dadurch gekennzeichnet,**
**dass** die Span-Leitstufe (11) auf der linken und auf der rechten Seite der Vorderkante (12) Material-Führungskanäle (22) aufweist, die durch eine Kanalbahn (23) verbunden sind.

4. Vorrichtung nach Anspruch 1,
**dadurch gekennzeichnet,**
**dass** die Span-Leitstufe (1) auf der linken und auf der rechten Seite relativ schmale Kanalbahnen (23) aufweist, deren äußerer Bereich jeweils eine, außen abgerundete, Material-Einweisungskante (24) aufweist.

5. Verfahren zum Rührreibschweißen von Werkstücken unterschiedlicher Dicke, insbesondere von rohrartigen Strukturen, mit den folgenden Verfahrensschritten:
a) zwei zu verschweißende Werkstücke (6), beispielsweise zwei Rohrteile im Zuge der Verlegung einer Hochspannungstrasse, werden so gelagert, dass sie von einer Halteglocke (3) für das Rührreibwerkzeug und ihrem Antriebskopf (2) umfahren werden können,
b) nach der Inbetriebnahme der Schweißvorrichtung nach einem der Ansprüche 1 bis 4 taucht die Schweißpin-Spitze (5) in das plastifizierte Material der beiden zu verbindenden Werkstücke (6) ein und umrundet beide Werkstücke (6), wobei der Schweißschuh (4) zur Einebnung von Höhenunterschieden verwendet wird, wobei die breitere Seite der trapezförmigen Glätt-Fläche (13) als Vorderkante (12) in der Richtung des Vorschubs (21) des Schweißschuhs (4) angeordnet ist.

## Claims

1. Device for the friction stir welding of workpieces of dissimilar thickness, in particular of tubular structures, said device having the following features:
a) a drive head (2) which by means of a receptacle head (1) is guided by a guiding machine, and a holding bell (3) for a welding shoe (4) that by means of a fastening flange (8) is screw-fitted to the drive head (2), form the drive and the guide for a welding pin tip (5);
b) the welding shoe (4) has a circular structure which in the centre thereof has a circular opening (14) for receiving the welding pin tip (5), wherein said circular opening (14) is mounted in a web that runs diagonally in relation to the circular structure of the welding shoe (4), said web having a smoothing face (13) in the movement direction (21) of the procedure of friction stir welding, and wherein the smoothing face (13) has a front edge (12) which is part of a step-shaped chip groove (11); and
c) the smoothing face (13) in relation to the vertical reference axis of the welding pin (4) has a small angle of attack (19),
**characterized in that**
the smoothing face (13) has the shape of an elongate trapezoidal structure which extends in the diagonal direction of the welding shoe (4), in which trapezoidal structure in the direction of advancement (21) of the welding shoe (4) in the forward region the wider side extends as a front edge (12), and in the rear region a corresponding narrower side extends as a rear edge (17), wherein furthermore the rear edge (17) forms the delimitation of a run-out face (15) of the smoothing face (13) that is conceived so as to be step-shaped, and wherein the trapezoidal structure is supplemented by a left and a right curve-shaped lateral face (18), the plane normal thereof in each case extending in the direction toward the opening (14) .

2. Device according to Claim 1,
**characterized in that**
the chip groove (11) on the left and on the right side of the front edge (12) has material-guiding ducts (22).

3. Device according to Claim 1,
**characterized in that**
the chip groove (11) on the left and on the right side of the front edge (12) has material-guiding ducts (22) which are connected by a duct track (23).

4. Device according to Claim 1,
**characterized in that**
the chip groove (1) on the left and on the right side has relatively narrow duct tracks (23), the external region of the latter having in each case one material-pathfinding edge (24) that is rounded on the outside.

5. Method for the friction stir welding of workpieces of dissimilar thickness, in particular of tubular structures, comprising the following method steps:
a) two workpieces (6) to be welded, for example two tubular parts in the course of the relocation of a high-tension line, are mounted such that said workpieces (6) can be driven around by a holding bell (3) for the friction stir welding tool and by the drive head (2) for said holding bell (3);
b) after setting in operation the welding device according to one of Claims 1 to 4, the welding pin tip (5) plunges into the plasticized material of the two workpieces (6) to be connected and revolves around both workpieces (6), wherein the welding shoe (4) is used for levelling height differences, wherein the wider side of the trapezoidal smoothing face (13) is disposed as the front edge (12) in the direction of advancement (21) of the welding shoe (4).

## Revendications

1. Dispositif pour le soudage par friction malaxage de pièces d'épaisseurs différentes, notamment de structures tubulaires, avec les caractéristiques suivantes :
a) une tête d'entraînement (2), guidée par une machine de guidage, au moyen d'une tête de réception (1), et une cloche de maintien (3) pour un sabot de soudage (4), vissée au moyen d'une bride de fixation (4) sur la tête d'entraînement (2), forment l'entraînement et le guidage pour une pointe de broche de soudage (5),
b) le sabot de soudage (4) a une structure circulaire qui présente en son centre une ouverture circulaire (14) pour recevoir la pointe de broche de soudage (5), cette ouverture circulaire (14) étant logée dans une entretoise s'étendant en diagonale par rapport à la structure circulaire du sabot de soudage (4), avec une surface lisse (13) dans la direction de déplacement (21) de l'opération de soudage par friction malaxage, et la surface lisse (13) présentant un bord avant (12) qui fait partie d'un gradin de conduction de copeaux en forme de gradin (11), et
c) la surface lisse (13) présente un petit angle d'inclinaison (19) par rapport à l'axe de référence vertical de la broche de soudage (4),
**caractérisé en ce que**
la surface lisse (13) présente la forme d'une structure trapézoïdale allongée, s'étendant dans la direction diagonale du sabot de soudage (4), dans laquelle le côté le plus large, en tant que bord avant (12) dans la direction de l'avancement (21) du sabot de soudage (4), s'étend dans la zone avant et un côté correspondant plus étroit, en tant que bord arrière (17), s'étend dans la zone arrière, le bord arrière (17) formant en outre la limite d'une surface de sortie placée en forme de gradin (15) de la surface lisse (13), et la structure trapézoïdale étant complétée par des surfaces latérales gauche et droite incurvées (18) dont les normales à la surface s'étendent respectivement en direction de l'ouverture (14).

2. Dispositif selon la revendication 1, **caractérisé en ce que** le gradin de conduction de copeaux (11) présente des canaux de guidage de matériau (22) sur le côté gauche et sur le côté droit du bord avant (12).

3. Dispositif selon la revendication 1, **caractérisé en ce que** le gradin de conduction de copeaux (11) présente des canaux de guidage de matériau (22) sur le côté gauche et sur le côté droit du bord avant (12), qui sont reliés par une voie de canaux (23).

4. Dispositif selon la revendication 1, **caractérisé en ce que** le gradin de conduction de copeaux (1) présente sur le côté gauche et sur le côté droit des voies de canaux (23) relativement étroites, dont la zone extérieure présente respectivement une arête d'introduction de matériau (24) arrondie à l'extérieur.

5. Procédé de soudage par friction malaxage de pièces d'épaisseurs différentes, notamment de structures tubulaires, avec les étapes de procédé suivantes :
a) deux pièces à souder (6), par exemple deux pièces tubulaires dans le cadre de la pose d'une ligne à haute tension, sont stockées de telle sorte qu'elles peuvent être contournées par une cloche de maintien (3) pour l'outil de friction malaxage et sa tête d'entraînement (2),
b) après la mise en marche du dispositif de soudage selon l'une quelconque des revendications 1 à 4, la pointe de la broche de soudage (5) plonge dans le matériau plastifié des deux pièces à relier (6) et fait le tour des deux pièces (6), le sabot de soudage (4) étant utilisé pour aplanir les différences de hauteur, le côté le plus large de la surface lisse trapézoïdale (13) étant agencé en tant que bord avant (12) dans la direction d'avancement (21) du sabot de soudage (4).
